# EUROPEAN PATENT APPLICATION

(11) **EP 4 703 215 A1**
(43) Date of publication of application: **04.03.2026**
(21) Application number: 24196745.4
(22) Date of filing: 27.08.2024
(51) Int. Cl.: B60R 25/24, E05B 77/48, G07C 9/00

(54) **A RETROFITTABLE CENTRAL LOCKING SYSTEM**

(71) Applicant: Dan-Car Autosikring ApS, 2640 Hedehusene (DK)
(72) Inventor: HANSEN, Jørgen Kruse, 2640 Hedehusene (DK)
(74) Representative: AWA Denmark A/S

(57) **Abstract**

A retrofittable central locking system adapted to be added to an existing central locking system. The system comprises one or more additional locks (6), a first detector adapted to detect an activation signal for the one or more existing locks (5) and a second detector adapted to detect a secondary signal which is characteristic for the automotive vehicle (1). Based on these signals a control unit (9) activates the one or more additional locks (6) in response to the receipt of the first signal as well as the second signal within a predetermined time frame.

## Description

The present invention relates to a retrofittable central locking system and a method of controlling one or more additional locks of a retrofitted central locking system.

In the market for retrofitted locks to secure van or lorry goods, various types of independent locks are used. Specifically, electric locks among these usually involve an independent operation that is not connected to the vehicle's primary or original central locking system. This design ensures that, in the event of a burglary targeting the vehicle's original central locking system, the retrofitted locks in the cargo area remain secured. This for instance prevents break-ins by discreetly accessing the vehicle's original locking system through a small, drilled hole in a door. The market includes independent control devices such as remote controls, code keyboards, Bluetooth-chips, apps, and similar technologies. These devices share a common purpose: to operate retrofitted locks securing valuable goods in typical vehicles, such as tools. This in turn involves several drawbacks. One is that the driver of a e.g. delivery van or lorry will have to handle and keep track of two devices such as two keys and/or remote controls at all times a day. Moreover, during each of numerous stops on a delivery route the driver will have to not only find both devices, but also operate each of them independently. Hence, one operation would be required for locking the cab or cabin using the key or remote control of the vehicles original central locking system, as well as a separate operation on the other key or remote control for the retrofitted device.

While these devices work well, there is a need for an improved locking system that facilitates the driver's task of locking and unlocking the vehicle.

According to a first aspect of the invention, this and/or other objects may potentially be achieved with a retrofittable central locking system adapted to be added to an existing central locking system with one or more existing locks installed in an automotive vehicle, said retrofittable central locking system comprising, one or more additional locks, a first detector adapted to detect an activation signal for the one or more existing locks and derive therefrom a first signal, a second detector adapted to detect a secondary signal, which is characteristic for the automotive vehicle and derive therefrom a second signal, a control unit adapted to receive the first signal and the second signal and to activate the one or more additional locks in response to the receipt of the first signal as well as the second signal within a predetermined time frame.

In this way the invention draws its advantage from the fact that almost all modern vehicles with central locking systems a visual or audible signal to indicate to the operator that the central locking system has been activated. Using a secondary signal derived therefrom according to the invention, allows the use of one and the same remote control, viz. that of the original central locking system, while still maintaining full security of the cargo hold, because even if the original central locking system is targeted by drilling or lock picking the cargo hold will not open.

By providing a locking system that is dependent on an activation signal and a secondary signal, the one or more additional locks may not be affected if it is attempted to break in by drilling a small hole in the vehicle. This is because it allows the system to distinguish between whether the wireless remote control is used to trigger the activation or whether the activation is caused by use of the physical key in the keyhole or tampering because those latter will not produce the secondary signal. This means that it may not be possible to access the cargo space even if someone has successfully activated the existing central locking system and unlocked the vehicle unless done by the remote control in turn allowing the use of only the existing remote control to unlock the entire vehicle. It should be understood that in this context activation of the locks means the process of locks changing their state, be it from locked to unlocked or vice versa.

According to a second aspect of the present invention, the above and/or other objects may potentially be achieved with a method of controlling one or more additional locks of a retrofitted central locking system installed in an automotive vehicle having an existing central locking system with one or more existing locks, said method comprising, detecting an activation signal for the one or more existing locks and deriving therefrom a first signal, detecting a secondary signal which is characteristic for the automotive vehicle and deriving therefrom a second signal, activating the one or more additional locks in response to the receipt of the first signal as well as the second signal within a predetermined time frame.

By this method, which is dependent on an activation signal and a secondary signal, the one or more additional locks may not be affected if it is attempted to break in by drilling a small hole in the vehicle. This is because it allows the system to distinguish between whether the wireless remote control is used to trigger the activation or whether the activation is caused by use of the physical key in the keyhole or tampering because those latter will not produce the secondary signal. This, in turn, means that it may not be possible to access the cargo space even if someone has successfully activated the existing central locking system and unlocked the vehicle unless done by the remote control in turn allowing the use of only the existing remote control to unlock the entire vehicle.

In an embodiment of the first aspect of the invention, the secondary signal from which the second signal is derived relates to the direction indicators of the vehicle. This utilizes the fact that most central locking systems use a flashing of the indicator as confirmation to the user, who may be at a distance to the vehicle, that the vehicle has actually locked or unlocked, as the case may be, when using the wireless remote control. This indication as a confirmation is not necessary when the user uses the physical key in the door, *inter alia* because at that distance the activation of the actuators for the locks are clearly audible. Therefore, most central locking systems dispense with this indication using the direction indicators when the user is using the physical key. The same would apply if the locking mechanism is otherwise tampered with, e.g. by drilling to the internal mechanism or by applying brute force such as a screwdriver in the keyhole.

In an embodiment of the first aspect of the invention, the secondary signal from the which the second signal is derived is a signal on a communication bus of the vehicle. In some vehicles it may be easier and thus less costly to gain access to the data from the communication bus, rather than having to locate the current wires supplying the blinkers which may be located outside of the driver's compartment.

In an embodiment of the first aspect of the invention, the communication bus is a CAN bus. This is a widely used communication bus in vehicle and system is thus adapted to be used with most modern vehicles.

In an embodiment of the first aspect of the invention, the control unit stores a prerecorded version of the second signal. This may allow the control unit to recognize the secondary signal which is characterized by the vehicle and detected by the second detector. In this way, the control unit activates the additional locks if the secondary signal corresponds to the prerecorded version of the second signal.

In an embodiment of the first aspect of the invention, an emergency button is associated with the control unit. This may be an advantage in situations where it is not possible to unlock the cargo space through the retrofittable locking system, e.g. if the direction indicators has stopped working or produces an unexpected signal due to a blown bulb. The emergency button may be placed in a driver's cabin of the vehicle. More specifically at hidden a location known only to the users of the vehicle, so that it will not be easily discovered by an intruder, who is not knowing about or expecting its existence in the first place.

In an embodiment of the second aspect of the invention, the secondary signal from which the second signal is derived relates to the direction indicators of the vehicle. This utilizes the fact that most central locking systems uses a flashing of the indicator as confirmation to the user, who may be at a distance to the vehicle, that the vehicle has actually locked or unlocked, as the case may be, when using the wireless remote control. This indication as a confirmation is not necessary when the user uses the physical key in the door, *inter alia* because at that distance the activation of the actuators for the locks are clearly audible. Therefore, most central locking systems dispense with this indication using the direction indicators when the user is using the physical key. The same would apply if the locking mechanism is otherwise tampered with, e.g. by drilling to the internal mechanism or by applying brute force such as a screwdriver in the keyhole.

According to an embodiment of the second aspect of the invention, the secondary signal from the which the second signal is derived is a signal on a communication bus of the vehicle. In some vehicles it may be easier and thus less costly to gain access to the data from the communication bus, rather than having to locate the current wires supplying the blinkers which may be located outside of the driver's compartment.

According to an embodiment of the second aspect of the invention, the communication bus is a CAN bus. This is a widely used communication bus in vehicle and system is thus adapted to be used with most modern vehicles and easy to derive the relevant signals from.

In an embodiment of the second aspect of the invention, in an initialization step the secondary signal which is characteristic for the automotive vehicle is produced and the second signal derived therefrom stored in a control unit. The initialization step allows the method of the system to be implemented in different kinds of vehicles, irrespective of their individual characteristics, i.e. blink duration and/or frequency, pitch and sound of the blinker verification in the cabin etc. which may vary from vehicle to vehicle and among manufacturers.

Furthermore, the retrofittable locking system according to the first aspect of the invention may include any one or more of the features, options, and/or embodiments described herein for the method of the second aspect of the present invention. Similarly, the method according to the second aspect of the disclosure may include any one or more of the features, options, and/or embodiments described herein for the retrofittable locking system of the first aspect of the present invention.

The invention will now be described in greater detail and with reference to the schematic drawings, on which:
Fig. 1 is a schematic side view sketch of a lorry;
Fig. 2 is a schematic diagram showing the control unit and associated wiring.

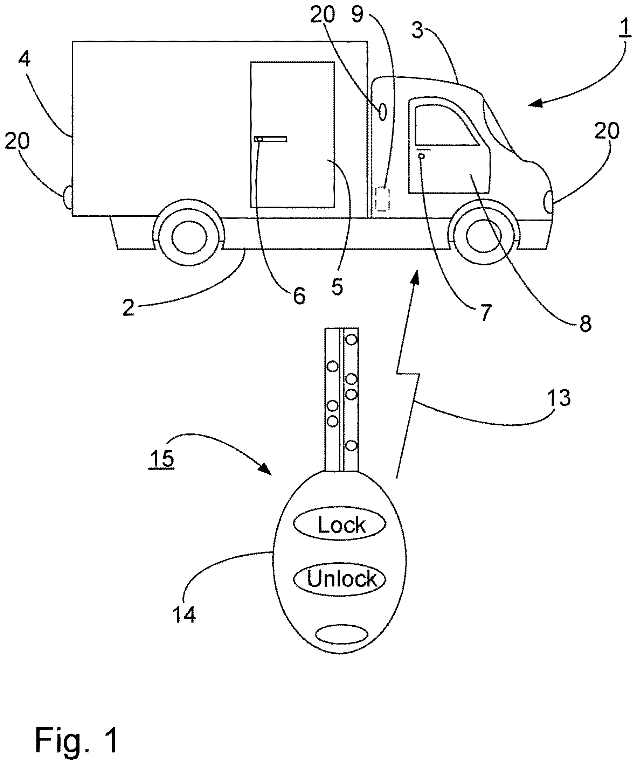

In Fig. 1 an automotive vehicle, more specifically a traditional lorry 1, is shown. The lorry 1 comprises a frame 2 with a cab 3 as normally delivered by the vehicle manufacturer and a closed cargo compartment 4, typically more or less custom built by a third party such as a coachbuilder to the specifications of an end user. The cargo compartment 4 in this illustrated is entirely separated from the cab 3 with no access passages between them, meaning that the only access to the cargo compartment is through whatever doors 5, provided by the coachbuilder. Typically, the doors would be a double door at the back of the lorry 1 (not visible) and sometimes a side door 5 as used here for illustrational purposes. Being fitted by a third party the doors 5 will not be integrated the central locking system of the lorry 1 from the manufactures hand. If the doors 5 of the cargo compartment 4 are to have central locks 6 they will need to be retrofitted, e.g. by the coachbuilder when making the cargo compartment 4, or at a later stage if the need arises. As mentioned, connecting the central locks of the doors 5 directly to the existing central locking system is undesirable because that would allow access to the cargo compartment 4 if the original locks 7 in the doors 8 of the cab 2 are tampered with or forcefully brought to activate the central locking. On the other hand, needing two separate keys, two separate remote controls or a mix thereof is also undesirable, if the doors 8 of the cab 3 and the doors 5 of the cargo compartment 4 are to be opened a large number of times during a day, e.g. during a delivery round trip with multiple stops.

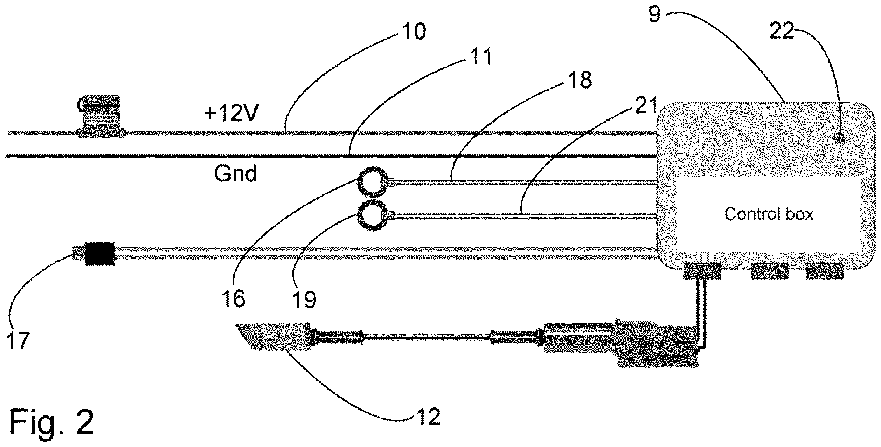

The present invention overcomes this by using the retrofittable system of Fig. 2 with the control box 9.

The control box 9 is installed in a suitable place in the vehicle 1. As can be seen the control box 9 will typically be supplied with electrical power from the existing +12 V or +24 V electrical system of the vehicle 1, as exemplified by connection wires 10, 11. The control box 9 controls the current to one or more additional central locks 6, i.e. the actuators 12 thereof to lock and unlock the additional locks 6 in an indirect response to a wireless command 13 from the original wireless remote control 14, typically built into a mechanical key 15 although modern vehicles often dispense with the mechanical key using only the wireless remote control 14.

The indirect response is provided by the control box 9 receiving signals from a pair of detectors 16, 19. The first detector 16 is adapted to detect an activation signal for the one or more existing locks and derive therefrom a first signal. In principle the first detector 16 could simply be a galvanic connection to a supply wire supplying the activation current to one of the actuators of one of the existing central locks 7. It is, however, preferred to use an inductive coupling to the supply wire, so as not to break the insulation of the supply wire, or interfering with the electronics and electrical of system of the vehicle 1. A single wire turn of a signal wire 18 around the supply wire will suffice provide the inductive coupling to derive the first signal from the activation signal for the existing locks, i.e. from supply current to the actuator of the existing lock 7. Similarly, the second detector 19 is adapted to detect as a secondary signal a signal for the indicators 20 of the vehicle, i.e. blinkers, and derive the second signal therefrom. In principle the second detector 19 could also simply be a galvanic connection to a supply wire supplying the light producing current to one of the indicators, be it an incandescent bulb or one or more LEDs. It is, however, again preferred to use an inductive coupling to the supply wire, so as not to break the insulation of the supply wire to the indicators. Still, a single wire turn of a signal wire 21 around the supply wire will suffice to inductively derive the secondary signal from the current supplied to the indicators 20. As an alternative or for redundancy, it may also be possible to use an acoustic transducer to pick up the sound from the acoustic indicator verification signal that is normally emitted in the cabin of the cab to alert the driver if an indicator has failed and send that signal to the control box 9 on the signal wire 21. As an alternative to the analogue signals above, digital signals may be used, e.g. reading the relevant signals for central lock activation and indicators, respectively, on a data bus, such as a CAN bus, of the vehicle, and derive therefrom the first and second signals needed by the control box 9.

The secondary signal, such as the indicator signal, is characteristic for the automotive vehicle, e.g. in timing and duration, or in case of the acoustic signal in duration, pitch and spectrum. The control box 9 uses the second signal derived from the secondary signal and the first signal as input to determine whether the secondary signal and the activation signal are correlated, e.g. occurring concurrently or within the same predetermined timeframe, say one to two seconds. If so, this is taken as an indication that the remote control 14 of the vehicle has been used, because tampering with the lock 7 or using solely the mechanical key 15 would not cause both signals. In accordance with that the control box 9 energizes the actuator 12 to lock or unlock the lock 6 to the cargo compartment 4.

The characteristics of the secondary signal and/or the time frames may be stored as a prerecorded versions in the control box 9 from the manufactures hand or it may be detected and stored during an initialization procedure allowing the control box 9 to be used with essentially any vehicle 1. This would *inter alia* allow the use of a further acoustic signal, e.g. if the vehicle is also giving off external sounds to indicate the locking and unlocking of the vehicle 1, which may then be picked up inside the cabin and stored.

The control box 9 may be located at any convenient place in the vehicle 1. It will, however, be convenient if a control button 17 that may also serve as an emergency button is provided in the cabin of the cab 3.

This will allow the initialization of the control box for the use with a specific vehicle 1. With the first and second detectors 16, 19 in place and the control box 9 connected to the electrical system of the vehicle 1 the initial coding may be performed. The user preferably closes all doors and windows and ensures that there is access to the control button 17 and the remote control 14. The user then presses and holds the control button down to ensure reading mode and presses lock on the remote control 14. The control box 9 will then read and store pattern of the first and second signals based on the activation signals and the secondary signals from the first and second detectors 16, 19. If reading and storage is successful this may be signalled to the user, e.g. by an LED 22 being lit. A corresponding procedure may then be performed for locking.

It may also be possible to program the control box 9 to perform delayed locking. This may be done as follows: With the locks unlocked, the control box 9 is set to delay recording mode e.g. by holding the control button pressed for a prolonged time until delay recording mode is indicated, e.g. by LED 22 flashing. In this mode pressing again and holding the control button 17 will allow the control box to record a delay corresponding to the duration the control button was held pressed, e.g. pressing six seconds to record a six second delay.

After this initial programming, the control button 17 may then be hidden away in a suitable location, where it is difficult to find for an intruder, most likely not looking for it anyway. If the system fails, a user may operate the control button 17 according to a predetermined pattern, such as pressing the button five times in a row, or the like, in order to cause the control box 9 to unlock the additional locks 6.

The invention has now been described using exemplary embodiments but the skilled person will understand that many variants and possibilities are possible, such as other user interfaces for programming the control box 9 and other ways of deriving the first and second signals, etc.

## Claims

1. A retrofittable central locking system adapted to be added to an existing central locking system with one or more existing locks installed in an automotive vehicle, said retrofittable central locking system comprising,
one or more additional locks,
a first detector adapted to detect an activation signal for the one or more existing locks and derive therefrom a first signal,
a second detector adapted to detect a secondary signal which is characteristic for the automotive vehicle and derive therefrom a second signal,
a control unit adapted to receive the first signal and the second signal and to activate the one or more additional locks in response to the receipt of the first signal as well as the second signal within a predetermined time frame.

2. A retrofittable central locking system according to claim 1, wherein the secondary signal from which the second signal is derived relates to the direction indicators of the vehicle.

3. A retrofittable central locking system according to any one of claims 1 and 2, wherein the secondary signal from the which the second signal is derived is a signal on a communication bus of the vehicle.

4. A retrofittable central locking system according to claim 3, wherein the communication bus is a CAN bus.

5. A retrofittable central locking system according to any one of claims 1 to 4, wherein the control unit stores a prerecorded version of the second signal.

6. A retrofittable central locking system according to any one of the preceding claims, wherein an emergency button is associated with the control unit.

7. A method of controlling one or more additional locks of a retrofitted central locking system installed in an automotive vehicle having an existing central locking system with one or more existing locks, said method comprising,
detecting an activation signal for the one or more existing locks and deriving therefrom a first signal,
detecting a secondary signal which is characteristic for the automotive vehicle and deriving therefrom a second signal,
activating the one or more additional locks in response to the receipt of the first signal as well as the second signal within a predetermined time frame.

8. A method according to claim 7, wherein the secondary signal from which the second signal is derived relates to the direction indicators of the vehicle.

9. A method according to any one of claims 7 and 8, wherein the secondary signal from the which the second signal is derived is a signal on a communication bus of the vehicle.

10. A method according to claim 9, wherein the communication bus is a CAN bus.

11. A method according to any one of claims 7 to 10, wherein in an initialization step the secondary signal, which is characteristic for the automotive vehicle, is produced and the second signal derived therefrom is stored in a control unit.
